# FASCICULE DE BREVET EUROPEEN

(11) **EP 3 887 065 B1**
(45) Date de publication et mention de la délivrance du brevet: **05.03.2025**
(21) Numéro de dépôt: 19808826.2
(22) Date de dépôt: 27.11.2019
(51) Int. Cl.: B05D 1/36, B05D 7/00, C09D 5/24, H05B 3/14, H05B 3/26

(54) **PROCÉDÉ DE RÉALISATION, D'APPLICATION ET DE FIXATION D'UN REVÊTEMENT DE SURFACE MULTICOUCHES SUR UN SUBSTRAT HÔTE ET DISPOSITIF DE SUBSTRAT HÔTE SUSCEPTIBLE D'ÊTRE OBTENU PAR LEDIT PROCÉDÉ**
VERFAHREN ZUR HERSTELLUNG, ANWENDUNG UND FIXIERUNG EINER MEHRSCHICHTIGEN OBERFLÄCHENBESCHICHTUNG AUF EINEM WIRTSSUBSTRAT, UND DURCH DIESES VERFAHREN HERSTELLBARE WIRTSSUBSTRATANORDNUNG
METHOD FOR PRODUCING, APPLYING AND FIXING A MULTILAYER SURFACE COATING ON A HOST SUBSTRATE, AND HOST SUBSTRATE ASSEMBLY WHICH CAN BE OBTAINED BY SAID METHOD

(30) Priorité: 27.11.2018 FR 1871908
(43) Date de publication de la demande: 06.10.2021
(73) Titulaire: Blackleaf, 67400 Illkirch-Graffenstaden (FR); Centre National de la Recherche Scientifique, 75794 Paris Cedex 16 (FR); Université de Strasbourg, 67081 Strasbourg Cedex (FR)
(72) Inventeur: BA, Housseinou, 67200 Strasbourg (FR); BAHOUKA, Armel, 67400 Illkirch (FR); LAFUE, Yannick, 67100 Strasbourg (FR); PHAM-HUU, Cuong, 67100 Strasbourg (FR)
(74) Mandataire: Novagraaf Technologies
(86) Numéro de dépôt international: PCT/EP2019/082738
(87) Numéro de publication internationale: WO 2020/109380

(56) Documents cités:
- EP-A1- 3 106 762
- WO-A1-2014/073402
- WO-A1-2016/126827
- FR-A1- 3 013 052
- GB-A- 2 535 499
- US-A1- 2014 021 195

## Description

La présente invention concerne le domaine des revêtements de surface et a pour objet un procédé de réalisation, d'application et de fixation d'un revêtement de surface multicouches sur au moins une surface à revêtir d'un substrat hôte. Elle a également pour objet, notamment, un dispositif de substrat hôte obtenu par ledit procédé. Elle a encore pour objet un élément chauffant comprenant un tel dispositif de substrat hôte, un élément anticorrosion comprenant un tel dispositif et un élément hydrophobe comprenant un tel dispositif.

Les matériaux bidimensionnels, connus sous le nom de matériaux 2D, tels que par exemple le graphène, mono ou multi-feuillets, et les matériaux carbonés, tels que par exemple les nanotubes de carbone et les nanofibres de carbone, possèdent des propriétés optiques, électroniques, mécaniques et thermiques excellentes, ainsi que des propriétés de flexibilité, de barrières aux gaz et à un liquide excellentes, voire extraordinaires, plus particulièrement pour le graphène et ses dérivées. Ces propriétés ont ouvert depuis quelques années la porte à de nombreuses applications potentielles notamment dans les domaines de l'électronique et des semi-conducteurs, du chauffage, de la lutte contre la corrosion ou les bio-salissures, de l'amélioration des propriétés tribologiques ou mécaniques, de la filtration ou autres barrières de protection, de l'optique, de la lumière ou de l'énergie. Ces matériaux représentent ainsi un potentiel considérable dans de très nombreuses applications.

Dans le domaine du chauffage, des peintures chauffantes incorporant de tels matériaux ont été développées. Le document WO2014/091161 concerne une peinture chauffante comprenant du graphite et destinée à être déposée, sous la forme d'au moins une couche de peinture, sur un substrat hôte en vue d'y appliquer, à l'aide de deux électrodes, une tension électrique de sorte à obtenir une augmentation de la température. Il est également connu des peintures chauffantes à base de graphène telle que celle fabriquée par le fabricant Graphenstone^{™}. De telles peintures permettent d'améliorer la régulation thermique des bâtiments et en réduisent notablement la consommation énergétique.

Toutefois, ce type de peinture, ou tout autre produit comprenant ces matériaux 2D et/ou carbonés, présente l'inconvénient de nécessiter une quantité importante de matériau(x) 2D et/ou carboné(s) incorporée dans cette même peinture pour réaliser une percolation assurant un maintien de la conduction électrique ou thermique dans le matériau, ce qui a pour résultat d'en faire des produits à un prix de fabrication relativement élevé.

Par ailleurs, le matériau 2D et/ou carboné, qui est noyé dans la masse du produit ou dispersé dans une solution liquide, par exemple dans la peinture, d'une résine ou dans un matériau semi-conducteur, génère une faible efficacité énergétique. Ceci est dû à la présence de l'isolant (polymère, peinture) autour des matériaux carbonés qui induit ainsi des pertes de conduction et nécessite des concentrations élevées en matériau(x) 2D et/ou carboné(s) pour assurer une bonne percolation. Les problèmes de surchauffe autour de ces points de jonction entre un conducteur (matériau(x) 2D et/ou carboné(s)) et un isolant (polymère, peinture, résine) pourraient aussi affecter la tenue du revêtement.

Le document EP 3 106 762 décrit une composition PTC (*Positive Temperature Coeficient*) comprenant 1) un matériau semi-cristallin ; 2) au moins un liant ; et 3) un matériau électroniquement conducteur. Dans certains modes de réalisation, la composition PTC comprend également un solvant. Ce document décrit en outre un élément de construction comprenant au moins une couche adhésive. La ou les couches adhésives peuvent avoir des fonctions multiples dans un élément de construction. En plus de la fonction adhésive, la couche adhésive peut fournir des propriétés de barrière à l'humidité, de conductivité ou d'isolation thermique, de blindage (EMF), de protection mécanique, ou une combinaison de ces propriétés. Le document divulgue aussi que la composition de la couche PTC, dans laquelle un liant est présent, peut en comprendre plus de 8%. La composition comprend également une couche adhésive qui sert entre autres à améliorer la conductivité thermique du dispositif.

La présente invention a pour but de pallier ces inconvénients.

A cet effet, la présente invention a pour objet un procédé selon la revendication 1.

Le procédé selon l'invention peut comprendre en outre une période de séchage de la couche fixatrice, pour favoriser la fixation de la couche fixatrice sur la ou chaque surface à revêtir du substrat hôte et/ou la fixation de la couche fonctionnelle sur la couche fixatrice, ladite période de séchage étant mise-en-œuvre avant et/ou après l'application de la couche fonctionnelle. La durée de la période de séchage peut dépendre de la nature de la couche fixatrice afin d'assurer une forte adhésion entre les différents matériaux constituant le produit final.

La présente invention a également pour objet un dispositif de substrat hôte obtenu par le procédé selon la présente invention, ledit dispositif de substrat hôte comprenant un substrat hôte présentant au moins une surface à revêtir, traitée ou non traitée, caractérisé en ce qu'il comprend en outre un revêtement de surface multicouches réalisé, appliqué et fixé directement sur la surface à revêtir, selon le procédé de la présente invention, ledit revêtement de surface multicouches comprenant une superposition d'une couche de produit fixateur, dite couche fixatrice, appliquée et fixée directement sur la ou chaque surface à revêtir, et une couche de produit fonctionnel, dite couche fonctionnelle, à base de graphène monofeuillet ou multifeuillets, appliquée et fixée directement sur la couche fixatrice. La couche fonctionnelle peut être appliquée plusieurs fois afin d'assurer une conductivité électrique spécifique à l'application visée. La couche fonctionnelle peut être protégée, notamment vis-à-vis du milieu externe, par une couche protectrice appliquée directement sur cette couche fonctionnelle.

La présente invention a encore pour objet un élément chauffant comprenant un dispositif de substrat hôte selon la présente invention, se caractérisant en ce qu'il comprend en outre un système d'activation apte à provoquer, en interaction avec le graphène monofeuillet ou multifeuillets, une élévation de la température de ladite couche fonctionnelle et donc de l'élément chauffant.

La présente invention a également pour objet un élément anticorrosion comprenant un dispositif de substrat hôte selon la présente invention, se caractérisant en ce que le produit fonctionnel est réalisé à partir de graphène monofeuillet ou multifeuillets, présentant naturellement des propriétés anticorrosion, la surface à revêtir du substrat hôte étant alors au moins en partie métallique. La surface à revêtir du substrat hôte pouvant alors être destinée à être en contact avec un milieu, par exemple liquide en étant immergé dans ce dernier, ou de gaz contenant des particules, ayant un pouvoir ou un effet encrassant ou salissant.

La présente invention a encore pour objet un élément hydrophobe comprenant un dispositif de substrat hôte selon la présente invention, se caractérisant en ce que la couche fonctionnelle possède en surface des propriétés hydrophobes et est traitée thermiquement ou chimiquement en surface pour obtenir lesdites propriétés hydrophobes sur la surface externe de ladite couche fonctionnelle.

L'invention sera mieux comprise, grâce à la description ci-après, qui se rapporte à au moins un mode de réalisation préféré, donné à titre d'exemple non limitatif, et expliqué avec référence aux dessins schématiques annexés, dans lesquels :
[Fig. 1] est une vue schématique en perspective d'un dispositif de substrat hôte selon la présente invention, avec la couche fonctionnelle à l'état apparent et accessible,
[Fig. 2] est une vue schématique en perspective du dispositif de substrat hôte représenté sur la figure 1, avec la couche fonctionnelle recouverte par une couche de protection,
[Fig. 3A] montre un substrat hôte consistant en un caillebotis, avant l'application de la couche fixatrice et la couche fonctionnelle sur une surface à revêtir dudit substrat hôte,
[Fig. 3B] montre la surface à revêtir du caillebotis représenté sur la figure 3a, recouverte par la couche fixatrice, lors de la phase d'application ou de dépôt par pulvérisation du produit fonctionnel sur ladite couche fixatrice pour former la couche fonctionnelle recouvrant cette dernière,
[Fig. 3C] montre la phase de séchage, au moyen d'un appareil de séchage, du revêtement de surface multicouches appliqué sur le substrat hôte représenté sur la figure 3b pour obtenir ainsi un dispositif de substrat hôte selon la présente invention,
[Fig. 3D] montre un élément chauffant, selon la présente invention, comprenant, d'une part, le dispositif de substrat hôte obtenu lors de la phase de séchage représentée sur la figure 3c et, d'autre part, des électrodes en cuivre posées en contact électrique avec la couche fonctionnelle du revêtement de surface multicouches, lesdites électrodes étant reliées à un instrument de mesure permettant de mesurer au moins une grandeur électrique telle qu'une résistance, une tension ou une intensité,
[Fig. 3E] montre l'élément chauffant de la figure 3d avec l'indication de la température mesurée à la surface de la couche fonctionnelle dans le cas d'une différence de potentiel électrique nulle entre les électrodes
[Fig. 3F] montre l'élément chauffant de la figure 3d avec l'indication de la température mesurée à la surface de la couche fonctionnelle dans le cas d'une différence de potentiel électrique entre les électrodes égale à 15 V et d'un courant électrique non nul entraînant une élévation de température significative,
[Fig. 4A] montre un substrat hôte consistant en un tube PVC recouvert sur sa face externe par la couche fixatrice contenant du produit fixateur à base d'une peinture de glycérol blanche déposée à l'aide d'un pinceau,
[Fig. 4B] montre le substrat hôte de la figure 4a lors de la phase d'application par pulvérisation du produit fonctionnel sur la couche fixatrice pour former la couche fonctionnelle recouvrant cette dernière et obtenir ainsi un dispositif de substrat hôte selon la présente invention,
[Fig. 4C] montre un élément chauffant, selon la présente invention, comprenant, d'une part, le dispositif de substrat hôte obtenu lors de la phase d'application représentée sur le la figure 4b et, d'autre part, des électrodes posées et en contact électrique avec la couche fonctionnelle contenant du produit fonctionnel,
[Fig. 4D] montre l'élément chauffant de la figure 4c avec l'indication de la température de la couche fonctionnelle dans le cas où aucune tension électrique n'est appliquée ou aucun courant électrique ne passe dans la couche fonctionnelle,
[Fig. 4E] montre la température enregistrée par une caméra infrarouge à la surface de la couche fonctionnelle dans le cas où une tension électrique égale à 10 V est appliquée entre les électrodes en contact avec la couche fonctionnelle en faisant passer un courant électrique dans cette dernière provoquant une élévation de sa température,
[Fig. 5A] montre un substrat hôte consistant en une plaque métallique,
[Fig. 5B] montre le substrat hôte de la figure 5a lors de la phase d'application, à l'aide d'un pinceau, du produit fixateur sur la surface à revêtir de l'un des deux côtés de la plaque métallique en vue de former la couche fixatrice recouvrant ladite surface,
[Fig. 5C] montre le substrat hôte avec la couche fixatrice formée lors de la phase d'application représentée sur la figure 5b, lors de la phase d'application par pulvérisation du produit fonctionnel sur ladite couche fixatrice pour former la couche fonctionnelle recouvrant cette dernière et ainsi le revêtement de surface multicouches formé par la superposition de la couche fixatrice et de la couche fonctionnelle,
[Fig. 5D] montre le substrat hôte de la figure 5c recouvert par le revêtement de surface multicouches après la phase de séchage dudit revêtement de surface multicouches dans un four formant ainsi un dispositif de substrat hôte selon la présente invention,
[Fig. 5E] montre un élément anticorrosion selon la présente invention comprenant le dispositif de substrat obtenu de la figure 5d ainsi préparé après traitement thermique pour éliminer l'humidité et pour fixer les couches de matériaux entre elles et montre que le frottement de la surface avec un papier blanc ne laisse pas de traces de graphène (matériau de la couche fonctionnelle) sur le papier indiquant ainsi la très bonne adhésion de ce dernier sur la couche fixatrice,
[Fig. 5F] montre un élément anticorrosion selon la présente invention comprenant le dispositif de substrat hôte de la figure 5d, dont les bords ont été recouverts par une couche de protection (en blanc), plongé dans un seau d'eau alimenté en continu par de l'eau courante,
[Fig. 5G] montre l'état de la surface, d'une part, vue de gauche, de l'un des côtés de la plaque métallique du dispositif de substrat hôte de la figure 5d recouverte par le revêtement de surface multicouches et, d'autre part, vue de droite, de l'autre côté de ladite plaque métallique non recouverte par un tel revêtement, dans une phase d'immersion de ladite plaque métallique, après un jour,
[Fig. 5H] montre la plaque métallique du dispositif de substrat hôte de la figure 5d après vingt et un jours d'immersion, la partie du substrat hôte (vue de gauche) non recouverte par le revêtement de surface multicouches comprenant la couche fixatrice et la couche fonctionnelle présentant des signes évidents de corrosion tandis que celle (vue de droite) recouverte par ledit revêtement de surface multicouches demeure intacte indiquant que la corrosion n'a pas eu lieu,
[Fig. 6A] montre un substrat hôte formé par des planches en bois brut,
[Fig. 6B] montre le substrat hôte de la figure 6a après application de la couche fixatrice et de la couche fonctionnelle, suivie par la pose d'électrodes, en contact avec la couche fonctionnelle, permettant de relier électriquement les planches entre elles et de former un élément chauffant selon la présente invention,
[Fig. 6C] montre l'application, dans l'élément chauffant de la figure 6b, à l'aide d'un pinceau, de la couche de protection à la surface de la couche fonctionnelle qui est en contact avec les électrodes,
[Fig. 6D] montre l'élément chauffant de la figure 6c avec la couche de protection,
[Fig. 6E] montre la température à la surface de l'élément chauffant représenté sur la figure 6d lorsqu'aucun courant électrique ne circule à travers les électrodes reliées à la couche fonctionnelle contenant le produit fonctionnel,
[Fig. 6F] montre la température à la surface de l'élément chauffant représenté sur la figure 6d lorsqu'une tension de 20 V est appliquée entre les électrodes avec un courant non nul.

La présente invention concerne un procédé de réalisation, d'application et de fixation d'un revêtement de surface multicouches 2a, 3a sur au moins une surface à revêtir 1a d'un substrat hôte 1 en vue d'obtenir un dispositif de substrat hôte.

Un tel substrat hôte 1 peut être réalisé ou composé en tout ou partie, mais non exclusivement, à partir de tous types de polymères (thermoplastiques et thermodurcissables), isolants ou conducteurs, métaux, alliages, oxydes, bois, céramiques, verres, papiers, textiles, le carbure de silicium, le titane, l'aluminium, le zinc, le téflon, le PMMA, le PEEK, le PLA, les microfibres de polypropylène connues sous la marque Herculon, les composites carbone / polymère, le Kevlar, le nylon ou encore le silicone.

Un tel substrat hôte 1 peut se présenter sous une forme liquide ou solide, flexible ou rigide. Il peut comprendre des liquides, par exemple, des monomères non polymérisés et/ou des solides, par exemple des polymères, des métaux, du bois, des céramiques.

Conformément à la présente invention, un tel procédé est réalisé selon la revendication 1.

La revendication 2 décrit une des mises en œuvre préférentielle du procédé selon l'invention.

La couche fixatrice 2a, contenant le produit fixateur 2, a plusieurs rôles ou fonctions dans le procédé faisant l'objet de la présente invention :
- elle joue le rôle de l'interface qui assure l'adhésion de la couche fonctionnelle 3a, contenant le produit fonctionnel 3, sur la surface à revêtir 1a du substrat hôte 1. En effet, dans certain cas la nature du substrat hôte 1, et donc de sa surface à revêtir 1a, ne permet pas une bonne adhésion directement d'une couche de produit fonctionnel,
- dans le cas où la couche fonctionnelle 3a est électriquement conductrice, elle permet d'isoler électriquement la couche fonctionnelle 3a par rapport au substrat hôte 1, dans le cas où ce dernier est électriquement conducteur. Ceci permet lorsque l'on applique une tension électrique dans la couche fonctionnelle 3a seule de chauffer cette dernière sans que le courant électrique ne passe dans l'ensemble du substrat hôte 1, évitant ainsi des problèmes de sécurité électriques quel que soit l'application visée.

On notera que la frontière entre la couche fixatrice 2a et la couche fonctionnelle 3a n'est pas nécessairement nette ou bien délimitée, c'est-à-dire qu'il peut y avoir une interpénétration, sur une certaine épaisseur, des deux couches 2a et 3a.

On entendra par surface à revêtir 1a non traitée du substrat hôte 1, la surface à revêtir 1a naturelle ou originelle du substrat hôte 1, c'est-à-dire avant l'application de la couche fixatrice 2a (contenant du produit fixateur 2) et par surface à revêtir 1a traitée, ladite surface à revêtir 1a naturelle ou originelle du substrat hôte 1 traitée, de préférence mécaniquement ou thermiquement ou chimiquement, ou sur laquelle est appliquée une ou plusieurs couches supplémentaires d'un matériau ou d'une composition de matériaux de sorte à permettre d'assurer la fixation directe du produit fixateur 2 sur ladite surface à revêtir 1a du substrat hôte 1. On comprendra alors que la surface à revêtir 1a, traitée ou non traitée, présente des propriétés de fixation permettant, par interaction de surface ou sous l'action d'une source de chaleur, la fixation de la couche fixatrice 2a sur cette dernière mais ne présente pas de propriétés de fixation analogues à celles de la couche fixatrice 2a de produit fixateur 2 permettant quant à elle, par interaction de surface, de préférence soit naturellement soit par une action thermique, la fixation du produit fonctionnel 3 sur ladite surface à revêtir 1a en vue de former la couche fonctionnelle 3a. La couche fixatrice 2a forme une interface de fixation entre la surface à revêtir 1a et la couche fonctionnelle 3a.

On comprendra que la couche fonctionnelle 3a permet d'assurer des fonctionnalités spécifiques du dispositif de substrat hôte selon la présente invention, par exemple, comme nous le verrons par la suite, en formant une couche de chauffage ou une couche hydrophobe ou encore une couche de protection, par exemple contre les ondes électromagnétiques. Un tel dispositif de substrat hôte pouvant alors permettre la réalisation d'un élément avec de telles fonctionnalités spécifiques, par exemple, chauffante, anticorrosive, antifouling, antiencrassement, antisalissaure ou hydrophobe, comme cela sera décrit par la suite dans les exemples d'éléments comprenant un tel dispositif de substrat hôte selon la présente invention.

On comprendra également que la couche fixatrice 2a de produit fixateur 2 et/ou la couche fonctionnelle 3a de produit fonctionnel 3 peut être réalisée en une ou plusieurs passes dudit produit fixateur ou fonctionnel selon l'application et les performances désirées.

De préférence, le procédé peut prévoir d'appliquer la couche fixatrice 2a sur la surface à revêtir 1a du substrat 1 en une ou plusieurs fois puis, après un temps de séchage, de la surface de la couche qui a été déposée en dernier dépendant de la nature du produit fixateur, on procède au dépôt de la couche fonctionnelle 3a. En fonction des propriétés attendues de l'élément ainsi réalisé, l'application du produit fonctionnel 3 pour former la couche fonctionnelle 3a peut être répétée afin d'obtenir une couche fonctionnelle 3a homogène et pouvant répondre, en termes de performances prévues, au cahier des charges.

On entendra par couche mince de produit fonctionnel, une couche présentant une épaisseur de préférence comprise entre environ 0,64 nm et 200 µm, de préférence entre 10 nm et 150 µm, et plus préférentiellement entre 1 µm et 100 µm. L'épaisseur de la couche fonctionnelle 3a peut être adaptée selon l'application visée et peut être différente sur la même surface à recouvrir afin de conférer à l'élément des propriétés de conduction électrique ou de chauffage spatialement sélectives déterminées en fonction de l'application visée. On peut par exemple déposer la couche 3 contenant du produit fonctionnel sur la surface de la couche 2, contenant du produit fixateur, à travers un masque, notamment si on veut laisser apparaître au moins une partie du substrat hôte, qui permet de réaliser une couche de dépôt de la couche 3 avec des motifs particuliers.

La quantité de graphène monofeuillet ou multifeuillets du produit fonctionnel 3 appliqué sur la couche fixatrice 2a, c'est à dire sur sa surface externe, peut être choisie de sorte à être inférieure à environ 10%, préférentiellement inférieure à environ 5%, plus préférentiellement inférieure à 3%, de la masse du poids dudit substrat hôte 1.

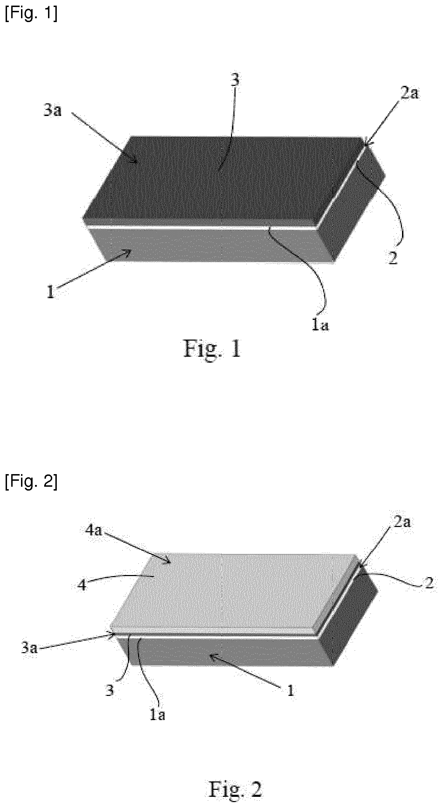

Dans une forme de réalisation particulière du procédé, comme on peut le voir sur la figure 2, celui-ci peut consister en outre, à partir d'un produit de protection 4 apte à être appliqué et fixé directement sur la couche fonctionnelle 3 par interaction entre eux, à appliquer une couche dudit produit de protection 4, dite couche de protection 4a, sur la couche fonctionnelle 3a en recouvrant cette dernière, l'interaction entre ces dernières, soit naturelle soit sous l'effet d'une action thermique, réalisant leur fixation l'une à l'autre. La couche de protection 4a peut être appliquée en une ou plusieurs passes et peut aussi être de nature différente selon l'application visée.

Ainsi, les deux formes de réalisation ci-dessus, avec ou sans couche de protection 4a, peuvent être utilisées en fonction des applications. La forme de réalisation sans couche de protection 4a (figure 1) peut être utilisée dans des applications nécessitant une accessibilité de la couche fonctionnelle 3a efficace contenant du graphène monofeuillet ou multifeuillets, par exemple dans les domaines de l'anticorrosion, l'antifouling/antisalissures ou la tribologie. La forme de réalisation avec la couche de protection 4a peut être utilisée dans des applications telles que le chauffage (dégivrage / antigivrage, chauffage domestique...), le blindage électromagnétique et/ou les dispositifs tels que les circuits électroniques ou les capteurs. Ces exemples d'application ne sont pas limités dans le cadre de l'invention.

Dans certaines applications telles que le chauffage ou le dégivrage, la couche de protection 4a permet de protéger la couche fonctionnelle 3a contenant le produit fonctionnel 3 vis-à-vis de l'humidité ou de chocs mécaniques afin d'assurer une bonne sécurité électrique pour l'élément et pour l'utilisateur.

La couche de protection 4a peut encore permettre de visualiser, par des moyens de mesures thermiques, la provenance de l'élément afin de contrôler des problèmes de fraude. Elle peut aussi permettre de protéger les dispositifs particuliers, motifs ou architectures, de la couche fonctionnelle 3a dans le cas où celle-ci comprend de tels dispositifs, motifs ou architectures. De préférence, dans les étapes d'application de la couche fixatrice 2a et/ou de la couche fonctionnelle 3a, le procédé peut consister à réaliser une épaisseur de la couche fonctionnelle 3a et/ou de la couche fixatrice 2a sensiblement uniforme ou non.

Le produit fonctionnel 3 comprend du graphène multi-feuillets ou monofeuillet à une concentration supérieure ou égale à 0.2g/l, de préférence supérieure ou égale à 1 g/l ou de manière encore plus préférée supérieure ou égale à 2g/l et au moins un tensioactif. On comprendra que la concentration est celle du graphène dans le produit fonctionnel.

Le produit fixateur 2 peut comprendre au moins l'un des produits appartenant à la liste suivante : apprêts, résines, agents adhésifs, composites, polymères, peinture époxy, peinture au silicium, peinture à base d'eau, peinture à base d'huile, peinture contenant des charges permettant de résister aux hautes températures.

Selon le procédé de la présente invention, la couche fixatrice 2a, ou la couche fonctionnelle 3a ou la couche de protection 4a, peut être appliquée, en une ou plusieurs passes et/ou dans des endroits différents, par tout moyen ou procédé tels que : pulvérisation, projection, brossage, étalement, revêtement par immersion, impression à jet d'encre ou encore héliogravure, sérigraphie, lithographie ou flexographie. Le produit de protection 4 peut comprendre au moins l'un des produits appartenant à la liste suivantes : apprêts, résines, agents adhésifs, polymères, composites, revêtements superhydrophobes, revêtements ignifuges tels que apprêts polymères, peintures époxy, peintures au silicium, peintures à base d'eau, peintures à base d'huile, peintures contenant des charges permettant de résister aux hautes températures, polyuréthanes, polyimides haute température, polyesters ou une combinaison d'au moins deux desdits produits.

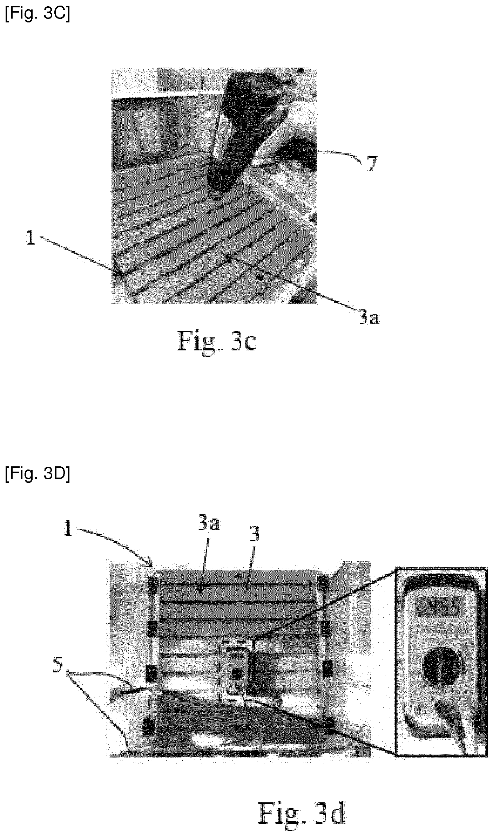

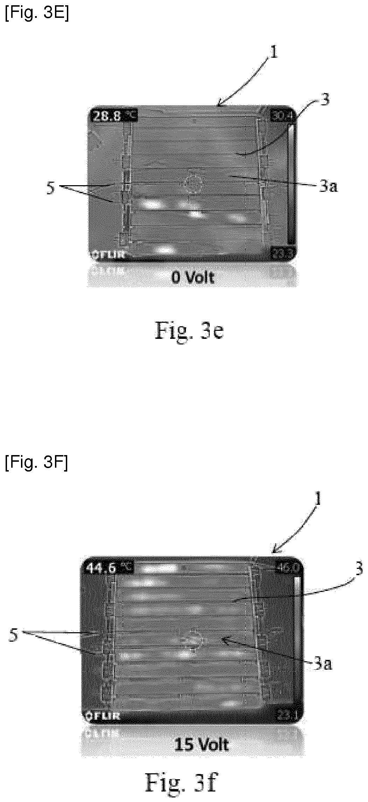

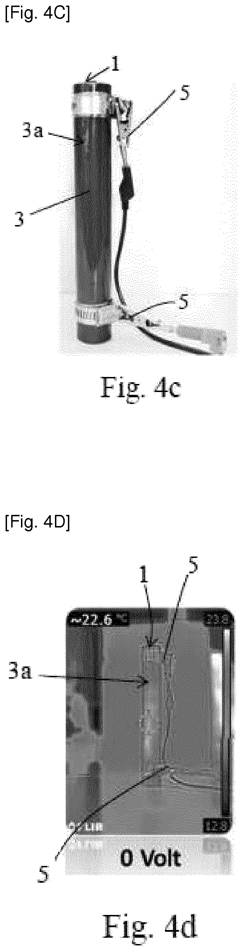

Si on se réfère aux figures 3d, 3e, 4c et 4d, on peut voir que dans une forme de réalisation particulière du procédé, celui-ci peut consister, à partir d'un système d'activation apte, c'est-à-dire par ses caractéristiques structurelles et fonctionnelles et lorsque celui-ci est mis à l'état d'activation, à provoquer, en interaction avec le graphène monofeuillet ou multifeuillets, une élévation de la température de ladite couche fonctionnelle 3a. L'activation du système d'activation peut être réalisée automatiquement, par exemple par un système de gestion et de contrôle électronique ou au moyen d'une commande manuelle, non représentés. Elle peut être aussi réalisée avec différentes sources d'alimentation afin d'obtenir un élément avec des zones de températures différentes en fonction des applications visées.

Dans cette forme de réalisation particulière du procédé, celui-ci peut consister à partir du système d'activation comprenant une alimentation électrique, non représentée sur les figures, et deux électrodes 5 connectées à cette dernière, à poser les électrodes 5 en les mettant en contact avec la couche fonctionnelle 3a de sorte à pouvoir appliquer une tension électrique générant un courant électrique dans la couche fonctionnelle 3a ayant pour effet de provoquer, en interaction avec le graphène monofeuillet ou multifeuillets(s), une élévation de la température de ladite couche fonctionnelle 3a. Dans ce type d'application de chauffage, le produit fixateur 2 de la couche fixatrice 2a est choisi de sorte à pouvoir résister à une élévation de température de la couche fonctionnelle 3a de produit fonctionnel 3.

Par ailleurs, la couche fonctionnelle 3a, une fois appliquée sur la couche fixatrice 2a, peut être traitée thermiquement ou chimiquement en surface pour obtenir des propriétés hydrophobes sur la surface externe de la couche fonctionnelle 3a. De tels moyens de traitement sont connus de l'homme du métier tels que par exemple : chauffage dans un four classique, microondes, infrarouge, induction électromagnétique, dopage ou réaction avec d'autres produits chimiques, pour ne citer que les moyens les plus connus. Ce traitement peut être réalisé en s'assurant que la couche fixatrice 2a possède des propriétés thermiques nécessaires pour ne pas être dégradée lors dudit traitement. De telles propriétés hydrophobes permettent de réduire la trainée d'eau ou de liquide condensée ou déposée sur la surface ainsi traitée et de protéger ainsi le substrat hôte 1. Un tel effet est difficile, voire impossible, à obtenir avec un produit, par exemple une peinture, contenant du graphène monofeuillet ou multifeuillets noyé dans cette dernière, du fait de la formation d'une porosité dans la matrice du graphène monofeuillet ou multifeuillets et du fait que la surface exposée ne contienne pas que du graphène monofeuillet ou multifeuillets jouant le rôle de produit hydrophobe. Un tel traitement de surface de la couche fonctionnelle 3a peut être utile pour réduire l'adsorption des composés hydrophiles, tels que des traces d'eau, présentes autour d'une charge d'hydrocarbure ou autre ou hydrate, ce qui permet de protéger le substrat hôte 1 en empêchant la formation de germes d'hydrates qui, avec le temps entraîne un bouchage partiel ou complet du conduit (pétrole ou gaz), sur la surface de la couche fonctionnelle 3a et donc sur la surface du substrat hôte 1 recouverte par cette dernière formant une partie du revêtement de surface multicouches selon l'invention.

Les figures annexées montrent un dispositif de substrat hôte, selon la présente invention, obtenu par le procédé selon la présente invention, ledit dispositif de substrat hôte comprenant un substrat hôte 1 présentant au moins une surface à revêtir 1a, traitée ou non traitée caractérisé en ce qu'il comprend en outre un revêtement de surface multicouches 2a, 3a susceptible d'être réalisé, appliqué et fixé sur la ou chaque surface 1a du substrat hôte 1, à revêtir selon le procédé de la présente invention, ledit revêtement de surface multicouches 2a, 3a comprenant, une superposition d'une couche de produit fixateur 2, dite couche fixatrice 2a, appliquée et fixée sur la ou chaque surface 1a à revêtir et une couche de produit fonctionnel 3, dite couche fonctionnelle 3a, à base de graphène monofeuillet ou multifeuillets, c'est-à-dire à base essentiellement ou comprenant essentiellement ou uniquement du graphène monofeuillet ou multifeuillets, appliquée et fixée sur la couche fixatrice 2a.

On comprendra notamment que suite à l'application du produit fonctionnel, qui se présente à ce stade de l'application sous une forme liquide, l'eau ou la solution hydro alcoolique ou le solvant s'est évaporée naturellement ou plus rapidement et de manière forcée, par exemple, par chauffage de la couche de produit fonctionnel ou de la couche de produit fixatrice par conduction thermique de cette dernière, ce qui a pour effet de laisser, sur la couche fixatrice, la couche de produit fonctionnel à base essentiellement ou comprenant essentiellement ou uniquement du graphène monofeuillet ou multifeuillets. Ainsi, la couche de produit fonctionnel 3 appliquée directement sur la couche fixatrice 2a peut être une couche fonctionnelle homogène ou quasi homogène de graphène.

Dans une forme particulière du revêtement de surface multicouches 2a, 3a, celui-ci peut comprendre en outre, comme vu précédemment selon le procédé, une couche de produit de protection 4, dite couche de protection 4a, appliquée et fixée sur la couche fonctionnelle 3a en recouvrant cette dernière. Cette couche de protection 4a peut avoir comme fonction l'isolement électrique de la couche fonctionnelle 3a lorsque celle-ci est conductrice du courant électrique, vis-à-vis de l'environnement extérieur, ce qui permet de réduire la dissipation de chaleur, lors du chauffage de la couche fonctionnelle 3a, vers le milieu extérieur et de ce fait, la concentrer ainsi vers le substrat 1 à chauffer, ou d'introduire un élément de décoration de couleur dans le système, et aussi pour la sécurité des utilisateurs. Cette couche de protection 4a de protection permet également de masquer certains motifs particuliers de la couche fonctionnelle 3, qui peuvent être visualisés, par exemple, par caméra infrarouge, en vue des contrôles de fraude par exemple.

De préférence, la quantité de graphène monofeuillet ou multifeuillets du produit fonctionnel 3 appliqué sur la ou chaque surface 1a à revêtir du substrat hôte 1 peut être inférieure à environ 10%, préférentiellement inférieure à environ 5%, et plus préférentiellement inférieure à 3%, de la masse dudit substrat hôte 1.

Comme on peut le voir notamment sur les figures 3e, 3f, 4e, , 4f et 5d5e, la présente invention a également pour objet un élément chauffant comprenant un dispositif de substrat hôte selon la présente invention.

Le revêtement de surface multicouches 2, 3 selon la présente invention peut être appliqué sur n'importe quelle surface à revêtir 1a du substrat hôte 1 et permet une utilisation efficace du graphène, monofeuillet et multifeuillets, par exemple, dans des domaines tels que l'électronique, l'optoélectronique (circuits électroniques, phototransistors ...) mais aussi dans le chauffage, le blindage électromagnétique et la sécurisation. Ces systèmes peuvent être aussi utilisés comme dispositifs hydrophobes pour réduire la formation des films d'eau ou de germes d'hydrates dans les applications d'échangeur de chaleur et dans les conduits de transport de liquides ou de gaz, ou comme dispositif à base de polymère électriquement conducteurs pour le remplacement des composés métalliques dans certaines applications. Parmi les applications liées au chauffage, on peut citer le chauffage domestique tel que, par exemple le chauffage mural, le chauffage au sol, le chauffage des meubles tels que les tables ou les chaises, le dégivrage/antigivrage et notamment le dégivrage des ailes d'aéronefs, et les capteurs. Ces dispositifs servent aussi dans le maintien en température des conduits de liquides ou de gaz afin d'éviter la formation des germes solides. D'autres applications, comme le textile chauffant, peuvent également être envisagées.

Conformément à la présente invention, un tel élément chauffant comprend en outre un système d'activation apte à provoquer, en interaction avec le graphène monofeuillet ou multifeuillets, une élévation de la température de ladite couche fonctionnelle 3a et donc de l'élément chauffant.

Avantageusement, le(s) dispositif(s) réalisé(s) selon l'invention peut avoir une vitesse de chauffe très importante pour atteindre le palier de température fixé, comprise entre 10 secondes et 1 heure, selon la tension qui est appliquée. En outre, les rapports courant appliqué sur énergie émise, pour un même type de substrat peuvent être compris dans un intervalle allant de 50 W/m² à 5000 W/m², de préférence entre 500 W/m² et 4000 W/m², et plus particulièrement entre 1000 W/m² et 3000 W/m², selon la tension de sortie qui est appliquée et la charge pondérale en graphène monofeuillet ou multifeuillets . En effet, compte tenu de la relative faible épaisseur de la couche fixatrice 2a et/ou de la couche fonctionnelle 3a qui sera appliquée par la suite, et le très faible taux de mélange entre elles, l'augmentation significative de température de la couche fonctionnelle 3a devrait pouvoir s'établir rapidement lorsqu'une tension est appliquée aux bornes.

Un tel élément chauffant selon la présente invention est différent de ceux de l'art antérieur car l'application des deux couches, à savoir la couche fixatrice 2a et la couche fonctionnelle 3a, peut être réalisée séparément entre un liant et un matériau conducteur d'électricité pour donner une couche de recouvrement uniforme sur la surface à revêtir 1a du substrat hôte 1 et non sous forme d'un mélange intime comme c'est le cas dans l'art antérieur, par exemple, tel que divulgué dans le document WO2014/091161 cité plus haut.

Dans une forme de réalisation préférentielle du système d'activation celui-ci peut comprendre deux électrodes 5 reliées à une alimentation électrique et lesdites électrodes peuvent être reliées à la couche fonctionnelle 3a de sorte à pouvoir appliquer une tension électrique permettant de faire passer un courant électrique dans la couche fonctionnelle 3a ayant pour effet de provoquer, en interaction avec le graphène monofeuillet ou multifeuillets, une élévation de la température de ladite couche fonctionnelle 3a et donc de l'élément chauffant. D'autres formes de réalisation du système d'activation peuvent être envisagées telles que par exemple une forme où le système d'activation comprend un émetteur d'ondes électromagnétiques ou d'infrarouge ou toute onde (GSM, 3G, 4G, WIFI...) dont la longueur d'onde est comprise entre 0.5 et 5GHz permettant, en interaction avec le graphène monofeuillet ou multifeuillets, une telle élévation de température.

Le substrat hôte 1 d'un tel élément chauffant peut consister, par exemple, en une paroi de séparation dans un bâtiment telle qu'une cloison ou une paroi murale ou autres supports, de tailles diverses. Plusieurs exemples de réalisation d'un tel élément chauffant à partir de substrats hôtes 1 de tailles et de formes diverses tels qu'une planchette en bois de forme rectangulaire et de dimensions, par exemple, 20 cm (longueur) x 12 cm (largeur), un caillebotis en plastique de forme carré et de dimensions, par exemple, 55 cm x 55 cm et un tube en plastique de dimensions, par exemple, 12 cm (diamètre) x 55 cm (longueur), ont permis de réaliser des essais démontrant une élévation de température significative.

Dans un premier exemple concernant la réalisation de l'élément chauffant selon la présente invention, le substrat hôte 1 consiste en une planchette en bois et le procédé a consisté à mettre en œuvre les étapes suivantes de réalisation, d'application et de fixation d'un revêtement de surface multicouches 2a, 3a sur ledit substrat hôte 1, selon la présente invention, non représentées sur les figures annexées :
- la couche fixatrice 2a, par exemple réalisée avec un produit fixateur 2 du type peinture, a été appliquée sur une surface à revêtir 1a du substrat hôte 1 à l'aide d'un pinceau,
- puis 5 minutes plus tard, le produit fonctionnel 3, tel qu'une solution liquide comprenant de l'eau et une concentration de 5g/L de graphène multifeuillets, a été pulvérisé, sur la surface supérieure de la couche fixatrice 2a en formant la couche fonctionnelle 3a qui recouvre cette dernière. L'opération peut être réalisée plusieurs fois afin d'obtenir une couche homogène et conductrice à base de graphène (couche fonctionnelle 3a) sur la surface de la couche fixatrice 2a. La quantité de graphène déposée est inférieure à 1% de la masse du substrat hôte 1,
- puis l'ensemble obtenu a été soumis à un processus de séchage à une température plus élevée que la température ambiante pour favoriser l'adhérence de la couche fixatrice 2a et de la couche fonctionnelle 3a entre elles d'une part et de la couche fixatrice 2a sur le substrat hôte 1 d'autre part,
- puis, après séchage et liaison des couches sur la surface à revêtir 1a du substrat hôte 1, deux électrodes 5 de cuivre ont été déposées et mises en contact électrique avec la couche fonctionnelle 3a. Le nombre d'électrodes 5 peut être supérieur à deux en fonction de la forme de l'élément chauffant obtenu et aussi en fonction des tensions que l'on veut appliquer dans ledit élément chauffant,
- puis la couche fonctionnelle 3a a été chauffée suite au passage d'un courant électrique direct lors de l'application d'une tension de 15 V, ce qui a entrainé une élévation de température de 24.4°C à 91.7°C en 15 minutes. Un tel élément chauffant, du fait de l'élévation de température significative avec une faible tension appliquée, a montré un rendement de conversion électrothermique élevé.

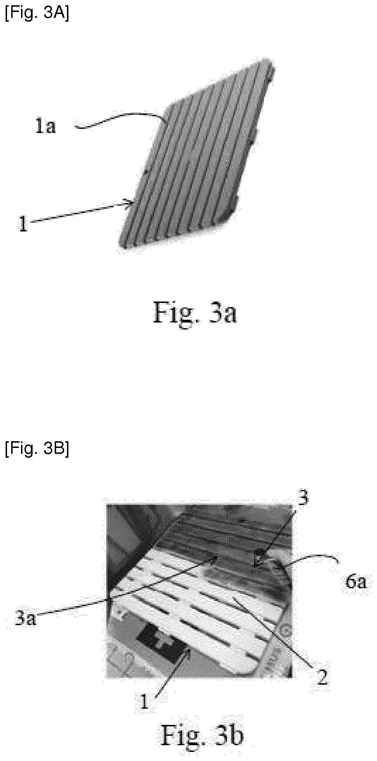

Dans un deuxième exemple concernant la réalisation de l'élément chauffant, le substrat hôte 1 consiste en un caillebotis en polymère de dimensions 55 cm x 55 cm, et le procédé a consisté à mettre en œuvre les étapes suivantes de réalisation, d'application et de fixation d'un revêtement de surface multicouches 2a, 3a sur ledit substrat hôte 1, selon la présente invention, comme on peut le voir sur les figures 3a, 3b, 3c, 3d :
- le produit fixateur 2 de type peinture glycérol blanche a été appliqué sur la surface à revêtir 1a du substrat hôte 1 par étalement à l'aide d'un pinceau non représenté (figure 3a),
- puis 15 minutes plus tard, le produit fonctionnel 3, tel qu'une solution liquide comprenant de l'eau et une concentration de 5 g/L de graphène multi-feuillets, a été pulvérisée à l'aide d'un appareil de pulvérisation 6a sur la couche fixatrice 2a en vue de former la couche fonctionnelle 3a, la quantité de graphène déposée étant inférieure à 1% de la masse du substrat hôte 1 (figure 3b). La zone de dépôt de la couche fonctionnelle 3a peut être visualisée en grise sur la figure 3b,
- ensuite, l'ensemble obtenu a été soumis à un processus de séchage à l'aide d'un appareil de séchage 7 pour favoriser l'adhérence de la couche fonctionnelle 3a avec la couche fixatrice 2a sur le substrat hôte 1 (figure 3c),
- après séchage de l'ensemble, des électrodes 5 ont été déposées sur la surface de la couche fonctionnelle 3a (figure 3d). La résistance électrique mesurée entre les deux bornes des électrodes 5, à l'aide d'un multimètre, est relativement basse, de l'ordre de 45 Ohms comme indiqué sur l'encart de la figure 3d,
- puis la couche fonctionnelle 3a a été chauffée par le passage d'un courant électrique direct lors de l'application d'une tension de 15 V, à travers les électrodes, ce qui a entrainé une élévation de sa température de 28.8°C (température ambiante mesurée lors de l'expérimentation) (figure 3e) à 44.6°C en 10 minutes (figure 3f). Un tel élément chauffant, du fait de l'élévation de température significative avec une faible tension appliquée a montré un rendement de conversion électrothermique élevé.

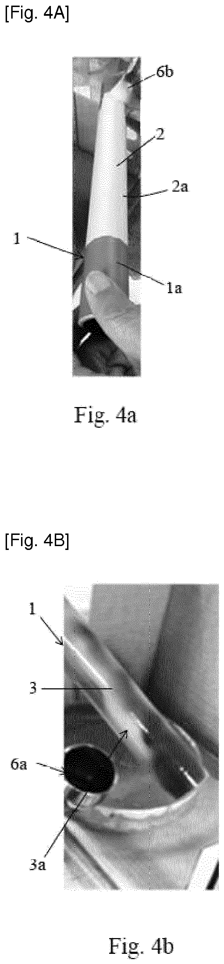

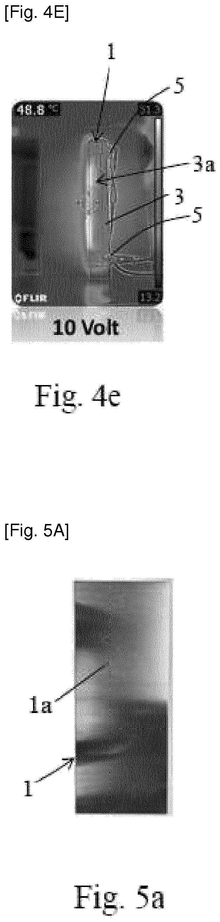

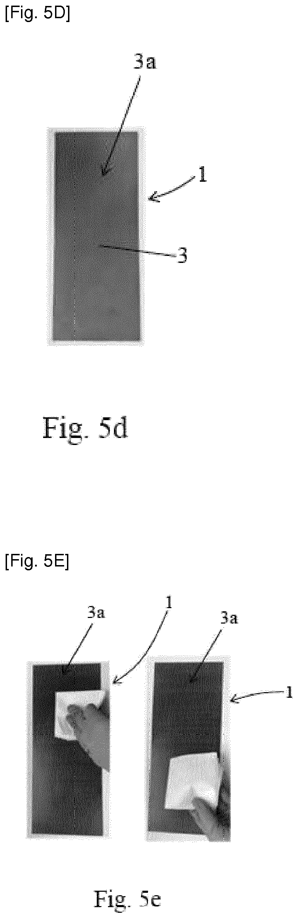

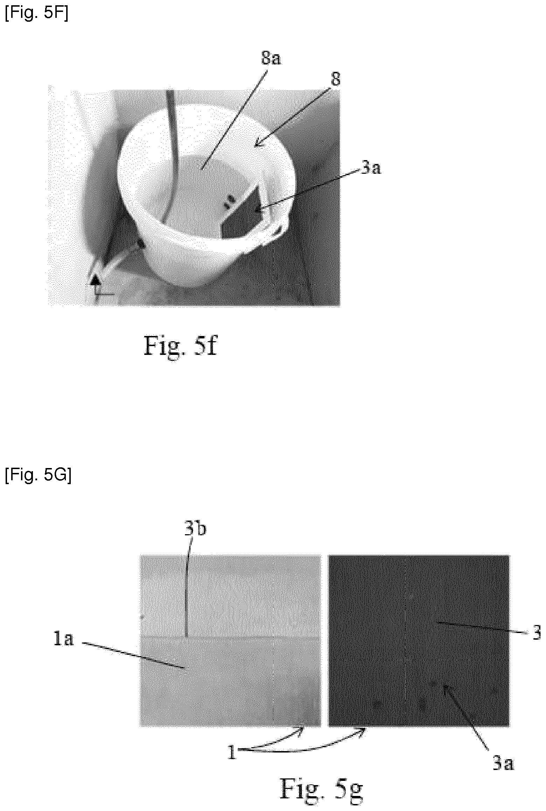

Dans un troisième exemple concernant la réalisation de l'élément chauffant, le substrat hôte 1 peut consister en un tube polymère, par exemple en PVC, et le procédé a consisté à mettre en œuvre les étapes suivantes de réalisation, d'application et de fixation d'un revêtement de surface multicouches 2a, 3a sur ledit substrat hôte 1, selon la présente invention, comme on peut le voir sur les figures 4a, 4b, 4c, 4e :
- le produit fixateur 2 de type apprêt tel qu'une peinture glycérol blanche a été appliqué sur surface externe du tube avec un pinceau 6b pour former la couche fixatrice 2a (figure 4a),
- 10 minutes plus tard, le produit fonctionnel 3 sous forme d'une solution liquide comprenant de l'eau et une concentration de 2 g / l de graphène multifeuillets a été pulvérisée à l'aide d'un appareil de pulvérisation 6a sur la couche fixatrice 2a en vue de former la couche fonctionnelle 3a, la quantité de graphène déposée étant inférieure à 1% de la masse du substrat hôte 1 (figure 4b). L'opération a été répétée quatre fois afin d'obtenir une couche fonctionnelle 3a homogène,
- puis l'ensemble obtenu a été soumis à un processus de séchage, non représenté sur les figures, pour favoriser l'adhérence de la couche fonctionnelle 3a sur la couche fixatrice 2a mais aussi de la couche fixatrice 2a sur le substrat hôte 1,
- puis après séchage, deux électrodes 5 de cuivre ont été déposées et mises en contact électrique avec la couche fonctionnelle 3a (figure 4c),
- puis la couche fonctionnelle 3a a été chauffée suite au passage d'un courant électrique direct lors de l'application d'une tension de 10 V, ce qui a entrainé une élévation de sa température de 22.6°C (figure 4d) à 48.8°C (figure 4e). Cet exemple a montré un rendement de conversion électrothermique élevé avec une température atteignant 50 ° C pour une tension faible de 10 V (figure 5e). Un tel élément chauffant, du fait de l'élévation de température significative avec une faible tension appliquée a montré un rendement de conversion électrothermique élevé.

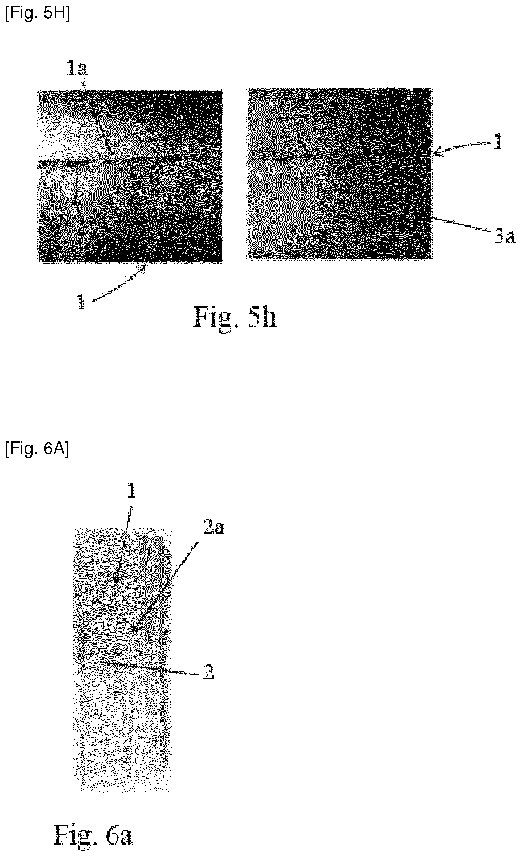

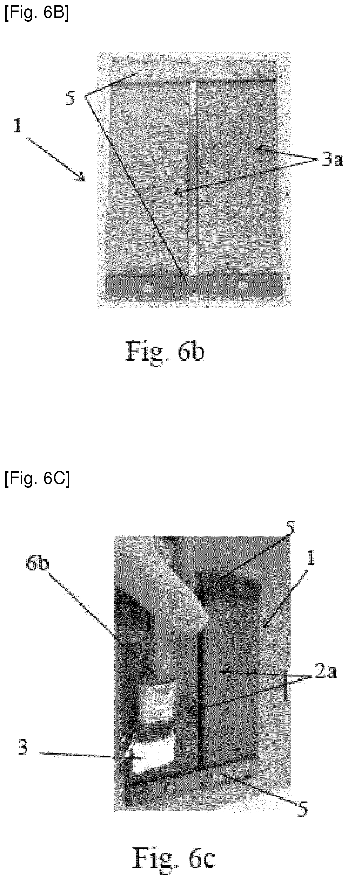

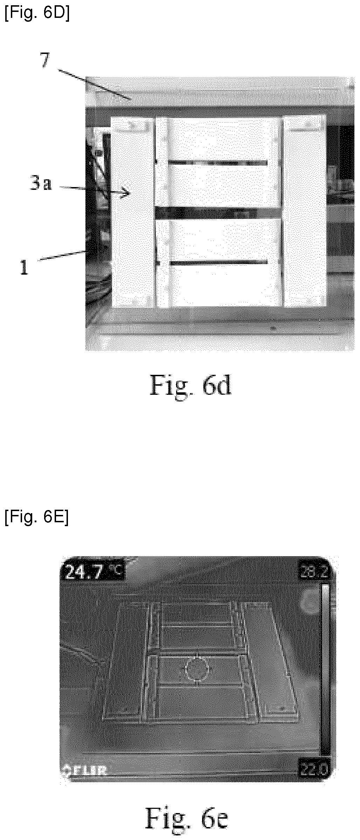

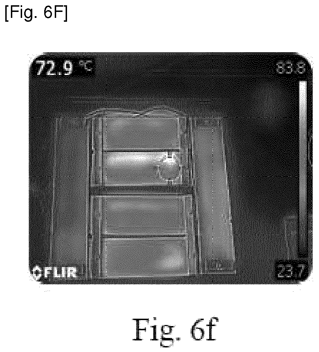

Dans un quatrième exemple concernant la réalisation de l'élément chauffant, le substrat hôte 1 en bois est constitué par des planches ou panneaux de bois pour des applications dans le domaine du chauffage d'habitation, et le procédé a consisté à mettre en œuvre les étapes suivantes de réalisation, d'application et de fixation d'un revêtement de surface multicouches 2, 3, 4 sur ledit substrat 1, selon la présente invention, comme on peut le voir sur les figures 6a, 6b, 6c, 6d :
- le produit fixateur 2 du type peinture glycérol a été appliqué sur la surface à revêtir 1a du substrat hôte 1 (figure 6a) par étalement à l'aide d'un pinceau non représenté,
- puis 10 minutes plus tard, le produit fonctionnel 3, tel qu'une solution liquide comprenant de l'eau et une concentration de 5 g/L de graphène multifeuillets a été pulvérisée à l'aide d'un appareil de pulvérisation sur la couche fixatrice 2a en vue de former la couche fonctionnelle 3a du produit fonctionnel. L'opération est répétée six fois pour déposer une couche fonctionnelle avec une faible résistance électrique. La quantité de graphène déposée étant inférieure à 0,5% du poids total du substrat hôte 1,- ensuite, l'ensemble obtenu a été soumis à un processus de séchage à l'aide d'un appareil de séchage pour favoriser l'adhérence de la couche fonctionnelle 3a avec la couche fixatrice 2a d'une part et cette dernière sur la surface à revêtir 1a du substrat hôte d'autre part,
- après séchage de l'élément permettant l'obtention d'une structure solidaire multicouches, des électrodes 5 de cuivre ont été déposées et mises en contact électrique avec la couche fonctionnelle 3a (figure 6b),
- ensuite une couche de protection 4a est appliquée sur la surface de la couche fonctionnelle 3a à l'aide d'un pinceau 6b (figure 6c),
- les planches sont assemblées ensuite sur une plaque 7 receveuse à base de plexiglas pour former une structure similaire à celle d'une structure chauffante (fig. 6d),
- l'ensemble des électrodes 5 en contact avec la couche fonctionnelle 3a est connecté au circuit électrique,
- puis la couche fonctionnelle 3a a été chauffée suite au passage d'un courant électrique direct lors de l'application d'une tension de 15 V à travers les électrodes 5, ce qui a entrainé une élévation de sa température de 24,7°C (figure 6e) à 72,9°C (figure 6f) en 20 minutes. Un tel élément chauffant, du fait de l'élévation de température significative avec une faible tension appliquée a montré un rendement de conversion électrothermique élevé (figure 6f).

Les exemples précédents de réalisation d'un élément chauffant selon la présente invention démontrent la faisabilité d'un tel élément chauffant, notamment pour ce qui concerne la couche fonctionnelle, à base de graphène monofeuillet et multifeuillets, sur différents types de surfaces.

Le revêtement de surface multicouches 2a, 3a, 4a selon la présente invention peut être appliqué sur n'importe quelle surface de substrat hôte 1 et permet une utilisation efficace du graphène, dans l'électronique, l'optoélectronique (circuits électroniques, phototransistors ...) mais aussi dans de nouveaux domaines tels que le chauffage, l'électromagnétique, le blindage et la sécurisation. Parmi les applications liées au chauffage, on peut citer le chauffage domestique tel que, par exemple le chauffage mural, le chauffage au sol, le chauffage des meubles tels que les tables ou les chaises, le dégivrage / antigivrage et notamment le dégivrage des ailes d'aéronefs, et les capteurs. D'autres applications, comme le chauffage de textiles, peuvent également être envisagées.

Si on se réfère à la figure 4, on peut voir que la présente invention a encore pour objet un élément anticorrosion comprenant un dispositif de substrat hôte selon la présente invention.

Conformément à la présente invention, dans un tel élément anticorrosion le produit fonctionnel 3 est réalisé à partir de graphène monofeuillet ou multifeuillets, présentant naturellement des propriétés d'anticorrosion, la surface à revêtir 1a du substrat hôte 1 étant alors au moins en partie métallique . La surface à revêtir 1a du substrat hôte 1 peut alors alors être destinée à être immergée, notamment dans un milieu liquide ou gazeux.

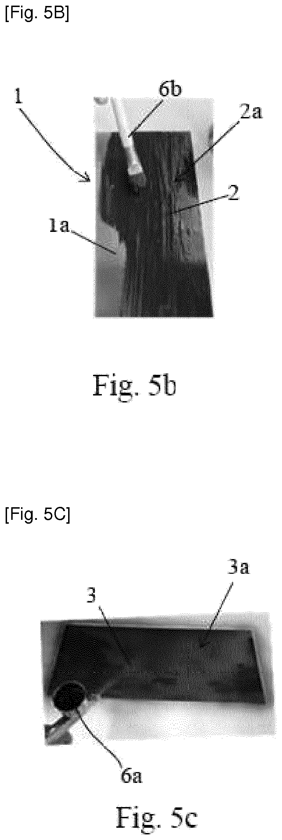

Un exemple concernant la réalisation d'un tel élément anticorrosion avec le substrat hôte 1 consistant en une plaque métallique de forme rectangulaire et de dimensions 12 x 20 cm, a consisté à mettre en œuvre les étapes suivantes de réalisation, d'application et de fixation d'un revêtement de surface multicouches 2a, 3a sur ledit substrat hôte 1, selon la présente invention, comme on peut le voir sur les figures 5a, 5b, 5c, 5d, 5e, 5f :
- le produit fixateur 2 a été appliqué sur un seul côté du substrat hôte 1 sur la surface à revêtir 1a métallique, avec un pinceau 6b, en vue de former la couche fixatrice 2a (figure 5a et figure 5b),
- 15 minutes plus tard, le produit fonctionnel 3 sous forme d'une solution liquide comprenant une concentration de 5 g/ l de graphène a été pulvérisé par un appareil de pulvérisation 6a uniquement ou essentiellement sur la couche fixatrice 2a précédemment en vue de former la couche fonctionnelle 3a, la quantité de graphène déposée est inférieure à 0.5% de la masse du substrat hôte 1 (figure 5c),
- puis l'ensemble obtenu a été soumis à un processus de séchage à 80°C pour favoriser l'adhésion de la couche fonctionnelle 3a sur la couche fixatrice 2a et de la couche fixatrice 2a sur la surface à revêtir 1a du substrat 1 (figure 5d),
- puis, après séchage et liaison du carbone du graphène sur la couche fixatrice 2a, le substrat hôte 1, dont l'une seulement de ses faces, ou l'un de ses côtés, est revêtu par le revêtement de surface multicouches 2a, 3a à base de graphène (figure 5e), a été placé dans un récipient 8 équipé d'un écoulement continu d'eau 8a (figure 5f).

Après 21 jours d'écoulement d'eau (figure 5h), il a pu être clairement observé, une détérioration de la partie non revêtu de revêtement de surface multicouches et une résistance élevée à la corrosion du côté revêtu de ce dernier démontrant ainsi la bonne performance d'un tel élément anticorrosion. Un tel élément anticorrosion, qui peut être également utilisé en tant qu'élément antiencrassement ou antisalissures, permet d'empêcher le dépôt de salissures sur le substrat hôte 1, par exemple en empêchant la croissance des algues sur des substrats hôtes 1 tels que des coques de bateau ou des conduites de pétrole ou encore pour prévenir ou ralentir la formation d'hydrates à l'intérieur des conduites de gaz ou de pétrole, et dans le domaine de la tribologie pour améliorer les propriétés de frottement entre les solides et les solides (par exemple : les engrenages entre les métaux dans le domaine de la mécanique des montres, des voitures, des pilotes industriels), entre les solides et l'air (par exemple les frottements des pales d'hélicoptère avec de l'air) ou entre les solides et les liquides (par exemple entre le pétrole et les parois des canalisations le transportant).

Un élément chauffant selon la présente invention peut être utilisé en tant qu'élément de dégivrage pour des structures métalliques. La présence de la couche fixatrice 2a permet d'isoler électriquement le produit fonctionnel 3 de la couche fonctionnelle 3a avec la structure métallique du substrat 1. Lors de l'application d'une tension entre les électrodes en contact avec la couche fonctionnelle 3a, la température de cette dernière va augmenter sans qu'il y ait de perte de courant dans le substrat hôte 1. Cette élévation de température dans la couche fonctionnelle 3a peut permettre de réduire les problèmes de formation de glace sur la structure.

La présente invention a également pour objet un élément hydrophobe comprenant un dispositif de substrat hôte selon la présente invention. Dans un tel élément, la couche fonctionnelle 3a présente en surface des propriétés hydrophobes. Cette propriété hydrophobe peut être générée soit en traitant thermiquement l'élément soit en traitant spécifiquement la surface de la couche fonctionnelle 3a par des traitements chimiques, par exemple la fonctionnalisation avec des substances hydrophobes.

L'hydrophobicité peut être améliorée en soumettant l'élément hydrophobe, après synthèse, à des traitements adéquats, thermiques ou chimiques, en fonction de la nature du substrat utilisé.

La présente divulgation peut également prévoir d'autres éléments comprenant un dispositif de substrat hôte selon la présente invention possédant des propriétés particulières, notamment en surface, par exemple des propriétés tribologiques particulières.

Bien entendu, l'invention n'est pas limitée au(x) mode(s) ou forme(s) de réalisation décrit(s) et représenté(s) aux dessins annexés. L'étendue de invention est définie selon les revendications.

## Revendications

1. Procédé de réalisation, d'application et de fixation d'un revêtement de surface multicouches (2a, 3a, 4a) sur au moins une surface (1a) à revêtir, d'un substrat hôte (1),
**caractérisé en ce qu'**il consiste, à appliquer successivement :
- une couche de produit fixateur (2), dite couche fixatrice (2a), directement sur la ou chaque surface (1a) à revêtir du substrat hôte (1) en recouvrant cette dernière, l'interaction de surface entre ces dernières réalisant leur fixation l'une à l'autre,
- une couche, de produit fonctionnel (3), dite couche fonctionnelle (3a), directement sur la couche fixatrice (2a) en recouvrant cette dernière, l'interaction de surface entre ces dernières réalisant leur fixation l'une à l'autre et donc la fixation de la couche fonctionnelle (3a) sur la ou chaque surface (1a) à revêtir du substrat hôte (1) par l'intermédiaire de la couche fixatrice (2a), ledit produit fonctionnel (3) étant appliqué sur la couche fixatrice (2a) par pulvérisation, projection ou étalement,
dans lequel,
ledit produit fonctionnel (3) présentant une forme liquide et comprenant du graphène monofeuillet ou multifeuillets à une concentration supérieure ou égale à 0.2g/L et au moins un tensioactif dispersé dans de l'eau, dans une solution hydro alcoolique ou dans un solvant,
ledit produit fixateur (2) étant apte à être appliqué et fixé directement sur la ou chaque surface (1a) à revêtir, du substrat hôte (1) par interaction de surface entre ledit produit fixateur (2) et ladite surface (1a) à revêtir, et
ledit produit fonctionnel (3) étant apte à être appliqué et fixé directement sur le produit fixateur (2) par interaction de surface entre ledit produit fonctionnel (3) et ledit produit fixateur (2).

2. Procédé selon la revendication 1, comprenant en outre une période de séchage de la couche fixatrice (2a), pour favoriser la fixation de la couche fixatrice (2a) sur la ou chaque surface (1a) à revêtir du substrat hôte (1) et/ou la fixation de la couche fonctionnelle (3a) sur la couche fixatrice (2a), ladite période de séchage étant mise-en-œuvre avant et/ou après l'application de la couche fonctionnelle (3a).

3. Procédé, selon la revendication 1 ou 2, **caractérisé en ce que** la quantité de graphène monofeuillet ou multifeuillets du produit fonctionnel (3) appliqué sur la couche fixatrice (2a) est choisie de sorte à être inférieure à environ 10%, préférentiellement inférieure à environ 5%, plus préférentiellement inférieure à 3%, de la masse dudit substrat hôte (1).

4. Procédé, selon l'une quelconque des revendications précédentes, **caractérisé en ce qu'**il consiste en outre, à partir d'un produit de protection (4) apte à être appliqué et fixé directement sur la couche fonctionnelle (3) par interaction entre eux, à appliquer une couche dudit produit de protection (4), dite couche de protection (4a), sur la couche fonctionnelle (3a) en recouvrant cette dernière, de préférence naturellement ou sous l'effet d'une action thermique, l'interaction entre ces dernières réalisant leur fixation l'une à l'autre.

5. Procédé, selon l'une quelconque desrevendications 1 à 4, **caractérisé en ce que** le produit fonctionnel (3) comprend du graphène monofeuillet ou multi-feuillets à une concentration supérieure ou égale à 1 g/L, de préférence supérieure ou égale à 2g/L et au moins un tensioactif.

6. Procédé selon l'une quelconque des revendications 1 à 5, **caractérisé en ce que** le produit fixateur (2) comprend au moins l'un des produits appartenant à la liste suivante : apprêts, résines, agents adhésifs, composites, polymères, peintures époxy, peintures à base d'eau, peintures à base d'huile ou peintures contenant des charges permettant de résister aux hautes températures.

7. Procédé, selon la revendication 3 ou selon l'une quelconque des revendications 4 à 6, prise chacune en combinaison avec la revendication 3 **caractérisé en ce que** le produit de protection 4 comprend au moins l'un des produits appartenant à la liste suivante : apprêts, résines, agents adhésifs, polymères, composites, revêtements superhydrophobes, revêtements ignifuges tels que les apprêts polymères, peintures époxy, peintures au silicium, peintures à base d'eau, peintures à base d'huile, peintures peintures contenant des charges permettant de résister aux hautes températures, polyuréthanes, polyimides haute température, polyesters.

8. Procédé selon l'une quelconque des revendications 1 à 7, **caractérisé en ce que** la couche fixatrice 2a ou la couche fonctionnelle 3a ou la couche de protection 4a est appliquée par un moyen ou procédé choisi parmi la liste suivante : pulvérisation, projection, brossage, étalement, revêtement par immersion, impression à jet d'encre ou encore héliogravure, sérigraphie, lithographie ou flexographie.

9. Procédé selon l'une quelconque des revendications 1 à 8, **caractérisé en ce qu'**il consiste, à partir d'un système d'activation à provoquer, en interaction avec le graphène monofeuillet ou multifeuillets, une élévation de la température de ladite couche fonctionnelle (3a).

10. Procédé selon la revendication 9, **caractérisé en ce qu'**il consiste à partir du système d'activation comprenant une alimentation électrique et deux électrodes (5) connectées à cette dernière, à poser les électrodes (5) en les mettant en contact avec la couche fonctionnelle (3a) de sorte à pouvoir appliquer une tension électrique permettant de faire passer un courant électrique dans la couche fonctionnelle (3a) ayant pour effet de provoquer, en interaction avec le graphène monofeuillet ou multifeuillets, une élévation de la température de ladite couche fonctionnelle (3a).

11. Procédé selon l'une quelconque des revendications 1 à 10, **caractérisé en ce que** la couche fonctionnelle (3a), une fois appliquée sur la couche fixatrice (2a), est traitée thermiquement ou chimiquement en surface pour obtenir des propriétés hydrophobes.

12. Dispositif de substrat hôte obtenu par le procédé selon l'une quelconque des revendications 1 à 11, ledit dispositif de substrat hôte comprenant un substrat hôte (1) présentant au moins une surface à revêtir (1a), traitée ou non traitée, **caractérisé en ce qu'**il comprend en outre un revêtement de surface multicouches (2a, 3a) réalisé, appliqué et fixé sur la ou chaque surface (1a) à revêtir selon le procédé de l'une quelconque des revendications 1 à 11, ledit revêtement de surface multicouches (2a, 3a) comprenant une superposition d'une couche de produit fixateur (2), dite couche fixatrice (2a), appliquée et fixée directement sur la ou chaque surface (1a) à revêtir et une couche de produit fonctionnel (3), dite couche fonctionnelle (3a), à base de graphène monofeuillet ou multifeuillets, appliquée et fixée directement sur la couche fixatrice (2a).

13. Dispositif de substrat hôte, selon la revendication 12, **caractérisé en ce que** le revêtement de surface multicouches (2a, 3a, 4a) comprend en outre une couche de produit de protection (4), dite couche de protection (4a), appliquée et fixée sur la couche fonctionnelle (3a) par interaction de surface en recouvrant cette dernière.

14. Dispositif de substrat hôte, selon la revendication 12 ou la revendication 13, **caractérisé en ce que** la quantité de graphène monofeuillet ou multifeuillets du produit fonctionnel (3) appliqué sur la ou chaque surface (1a) à revêtir du substrat hôte (1) est inférieure à environ 10%, préférentiellement inférieure à environ 5%, plus préférentiellement inférieure à 3%, de la masse dudit substrat hôte (1).

15. Elément chauffant comprenant un dispositif de substrat hôte selon l'une quelconque des revendications 12 à 14, **caractérisé en ce qu'**il comprend en outre un système d'activation à provoquer, en interaction avec le graphène monofeuillet ou multifeuillets, une élévation de la température de ladite couche fonctionnelle (3a) et donc de l'élément chauffant.

16. Elément chauffant, selon la revendication 15, **caractérisé en ce que** le système d'activation comprend deux électrodes (5) reliées à une alimentation électrique et **en ce que** lesdites électrodes (5) sont reliées à la couche fonctionnelle (3a) de sorte à pouvoir appliquer une tension électrique permettant de générer un courant électrique dans la couche fonctionnelle (3a) ayant pour effet de provoquer, en interaction avec le graphène monofeuillet ou multifeuillets, une élévation de la température de ladite couche fonctionnelle (3a) et donc de l'élément chauffant.

17. Elément anticorrosion comprenant un dispositif de substrat hôte selon l'une quelconque des revendications 12 à 14, **caractérisé en ce que** le produit fonctionnel (3) est réalisé à partir de graphène monofeuillet ou multifeuillets, présentant naturellement des propriétés anticorrosion, la surface (1a) à revêtir du substrat hôte (1) étant alors au moins en partie métallique

18. Elément hydrophobe comprenant un dispositif de substrat hôte selon l'une quelconque des revendications 12 à 17, **caractérisé en ce que** la couche fonctionnelle (3a) présente en surface des propriétés hydrophobes et est traitée thermiquement ou chimiquement en surface pour obtenir lesdites propriétés hydrophobes sur la surface externe de ladite couche fonctionnelle.

## Patentansprüche

1. Verfahren zur Herstellung, Aufbringung und Fixierung einer mehrschichtigen Oberflächenbeschichtung (2a, 3a, 4a) auf mindestens einer zu beschichtenden Oberfläche (1a) eines Wirtssubstrats (1)
**dadurch gekennzeichnet, dass** es darin besteht, nacheinander anzuwenden:
- eine Schicht eines Fixierprodukts (2), Fixierschicht (2a) genannt, direkt auf die oder jede zu beschichtende Oberfläche (1a) des Trägersubstrats (1), indem sie diese bedeckt, wobei die Oberflächenwechselwirkung zwischen diesen letzteren ihre gegenseitige Fixierung bewirkt,
- eine Schicht eines funktionellen Produkts (3), Funktionsschicht (3a) genannt, direkt auf die Fixierschicht (2a), indem sie diese bedeckt, wobei die Oberflächenwechselwirkung zwischen diesen letzteren ihre gegenseitige Fixierung und somit die Fixierung der Funktionsschicht (3a) auf der oder jeder zu beschichtenden Oberfläche (1a) des Trägersubstrats (1) mittels der Fixierschicht (2a) bewirkt, wobei das funktionelle Produkt (3) auf die Fixierschicht (2a) durch Aufsprühen, Aufspritzen oder Auftragen aufgebracht wird,
wobei,
wobei das funktionelle Produkt (3) in flüssiger Form vorliegt und ein- oder mehrschichtigem Graphen in einer Konzentration von mindestens 0,2 g/l und mindestens ein in Wasser, einer wässrig-alkoholischen Lösung oder in einem Lösungsmittel dispergiertes Tensid enthält,
das Fixierprodukt (2) direkt auf die zu beschichtende(n) Oberfläche(n) (1a) des Wirtssubstrats (1) durch Oberflächenwechselwirkung zwischen dem Fixierprodukt (2) und der zu beschichtende Oberfläche (1a) aufgebracht und fixiert werden kann, und
wobei das funktionelle Produkt (3) direkt auf das Befestigungsprodukt (2) aufgebracht und befestigt werden kann, und zwar durch Oberflächenwechselwirkung zwischen dem funktionellen Produkt (3) und dem Befestigungsprodukt (2).

2. Verfahren nach Anspruch 1, ferner umfassend eine Trocknungsperiode für die Fixierschicht (2a), um die Fixierung der Fixierschicht (2a) auf der oder jeder zu beschichtende Oberfläche (1a) des Wirtssubstrats (1) und/oder die Fixierung der Funktionsschicht (3a) auf der Fixierschicht (2a) zu fördern, wobei die Trocknungsperiode vor und/oder nach dem Aufbringen der Funktionsschicht (3a) durchgeführt wird.

3. Verfahren nach Anspruch 1 oder Anspruch 2, **dadurch gekennzeichnet, dass** die Menge an ein- oder mehrschichtigem Graphen des funktionellen Produkts (3), das auf die Fixierschicht (2a) aufgebracht wird, so gewählt wird, dass sie weniger als etwa 10 %, vorzugsweise weniger als etwa 5 %, noch bevorzugter weniger als 3 %, der Masse des Wirtssubstrats (1) beträgt.

4. Verfahren nach einem der vorhergehenden Ansprüche, **dadurch gekennzeichnet, daß** es außerdem darin besteht, ausgehend von einem Schutzprodukt (4), das direkt auf die Funktionsschicht (3) durch Wechselwirkung zwischen ihnen aufgebracht und befestigt werden kann, eine Schicht dieses Schutzprodukts (4), Schutzschicht (4a) genannt, auf die Funktionsschicht (3a) aufzubringen, indem diese vorzugsweise auf natürliche Weise oder unter der Wirkung einer thermischen Einwirkung bedeckt wird, wobei die Wechselwirkung zwischen ihnen ihre Befestigung aneinander bewirkt.

5. Verfahren nach einem der Ansprüche 1 bis 4, **dadurch gekennzeichnet, dass** das funktionelle Produkt (3) ein- oder mehrschichtigem Graphen in einer Konzentration von größer oder gleich 1 g/L, vorzugsweise größer oder gleich 2 g/L, und mindestens ein Tensid enthält.

6. Verfahren nach einem der Ansprüche 1 bis 5, **dadurch gekennzeichnet, dass** das Fixierprodukt (2) mindestens eines der Produkte umfasst, die zu der folgenden Liste gehören: Grundierungen, Harze, Klebstoffe, Verbundstoffe, Polymere, Epoxidfarben, Farben auf Wasserbasis, Farben auf Ölbasis oder Farben, die Füllstoffe für die Beständigkeit gegen hohe Temperaturen enthalten.

7. Verfahren nach Anspruch 3 oder nach einem der Ansprüche 4 bis 6, jeweils in Kombination mit Anspruch 3, **dadurch gekennzeichnet, dass** das Schutzprodukt 4 mindestens eines der Produkte umfasst, die zur folgenden Liste gehören: Grundierungen, Harze, Klebstoffe, Polymere, Verbundstoffe, superhydrophobe Beschichtungen, feuerfeste Beschichtungen wie polymere Grundierungen, Epoxidfarben, Silikonfarben, Farben auf Wasserbasis, Farben auf Ölbasis, Farben, die Füllstoffe für die Beständigkeit gegen hohe Temperaturen enthalten, Polyurethane, Hochtemperaturpolyimide, Polyester.

8. Verfahren nach einem der Ansprüche 1 bis 7, **dadurch gekennzeichnet, dass** die Fixierschicht (2a) oder die Funktionsschicht (3a) oder die Schutzschicht (4a) durch ein Mittel oder Verfahren aufgebracht wird, das aus der folgenden Liste ausgewählt ist: Sprühen, Schleudern, Pinseln, Streichen, Tauchbeschichten, Tintenstrahldruck oder Tiefdruck, Siebdruck, Lithographie oder Flexographie.

9. Verfahren nach einem der Ansprüche 1 bis 8, **dadurch gekennzeichnet, dass** es darin besteht, ausgehend von einem Aktivierungssystem in Wechselwirkung mit dem ein- oder mehrschichtigem Graphen eine Erhöhung der Temperatur der genannten funktionellen Schicht (3a) zu bewirken.

10. Verfahren nach Anspruch 9, **dadurch gekennzeichnet, dass** es darin besteht, ausgehend von dem Aktivierungssystem, das eine elektrische Stromversorgung und zwei mit dieser verbundene Elektroden (5) umfasst, die Elektroden (5) so anzuordnen, dass sie mit der funktionellen Schicht (3a) in Kontakt gebracht werden, um eine elektrische Spannung anlegen zu können, die es ermöglicht, einen elektrischen Strom durch die funktionelle Schicht (3a) fließen zu lassen, der in Wechselwirkung mit dem ein- oder mehrschichtigem Graphen eine Erhöhung der Temperatur der funktionellen Schicht (3a) bewirkt.

11. Verfahren nach einem der Ansprüche 1 bis 10, **dadurch gekennzeichnet, dass** die funktionelle Schicht (3a), nachdem sie auf die Fixierschicht (2a) aufgebracht wurde, thermisch oder chemisch an der Oberfläche behandelt wird, um hydrophobe Eigenschaften zu erhalten.

12. Wirtssubstratvorrichtung, die durch das in einem der Ansprüche 1 bis 11 beanspruchte Verfahren erhalten wird, wobei die Wirtssubstratvorrichtung ein Wirtssubstrat (1) mit mindestens einer zu beschichtenden Oberfläche (1a) umfasst, unabhängig davon, ob diese behandelt oder unbehandelt ist, **dadurch gekennzeichnet, dass** sie außerdem eine mehrschichtige Oberflächenbeschichtung (2a, 3a) umfasst, die nach dem in einem der Ansprüche 1 bis 11 beanspruchten Verfahren hergestellt, aufgebracht und auf der oder jeder zu beschichtenden Oberfläche (1a) befestigt wird, wobei die mehrschichtige Oberflächenbeschichtung (2a, 3a) eine Überlagerung einer Schicht aus einem Fixierprodukt (2), Fixierschicht (2a) genannt, die direkt auf die oder jede zu beschichtende Oberfläche (1a) aufgebracht und befestigt wird, und einer Schicht aus einem funktionellen Produkt (3), Funktionsschicht (3a) genannt, auf der Basis von ein- oder mehrschichtigem Graphen, die direkt auf die Fixierschicht (2a) aufgebracht und befestigt wird, umfasst.

13. Wirtssubstratvorrichtung nach Anspruch 12, **dadurch gekennzeichnet, dass** die mehrschichtige Oberflächenbeschichtung (2a, 3a, 4a) außerdem eine Schicht aus einem Schutzmaterial (4), die so genannte Schutzschicht (4a), umfasst, die auf die Funktionsschicht (3a) aufgebracht und durch Oberflächenwechselwirkung an dieser befestigt ist und diese bedeckt.

14. Wirtssubstratvorrichtung nach Anspruch 12 oder Anspruch 13, **dadurch gekennzeichnet, dass** die Menge an ein- oder mehrschichtigem Graphen des funktionellen Produkts (3), die auf die oder jede zu beschichtende Oberfläche (1a) des Wirtssubstrats (1) aufgebracht wird, weniger als etwa 10 %, vorzugsweise weniger als etwa 5 %, noch bevorzugter weniger als 3 %, der Masse des Wirtssubstrats (1) beträgt.

15. Heizelement mit einer Wirtssubstratvorrichtung nach einem der Ansprüche 12 bis 14, **dadurch gekennzeichnet, dass** es ferner ein Aktivierungssystem umfasst, um in Wechselwirkung mit dem ein- oder mehrschichtigem Graphen eine Erhöhung der Temperatur der Funktionsschicht (3a) und damit des Heizelements zu bewirken.

16. Heizelement nach Anspruch 15, **dadurch gekennzeichnet, dass** das Aktivierungssystem zwei Elektroden (5) umfasst, die mit einer Stromversorgung verbunden sind, und dass die Elektroden (5) mit der Funktionsschicht (3a) verbunden sind, um eine elektrische Spannung anlegen zu können, die es ermöglicht, in der Funktionsschicht (3a) einen elektrischen Strom zu erzeugen, der in Wechselwirkung mit dem ein- oder mehrschichtigem Graphen eine Erhöhung der Temperatur der Funktionsschicht (3a) und somit des Heizelements bewirkt.

17. Korrosionsschutzelement mit einer Wirtssubstratvorrichtung nach einem der Ansprüche 12 bis 14, **dadurch gekennzeichnet, dass** das Funktionsprodukt (3) aus ein- oder mehrschichtigem Graphen besteht, das von Natur aus Korrosionsschutzeigenschaften aufweist, wobei die zu beschichtende Oberfläche (1a) des Wirtssubstrats (1) dann zumindest teilweise metallisch ist.

18. Hydrophobes Element mit einer Wirtssubstratvorrichtung nach einem der Ansprüche 12 bis 17, **dadurch gekennzeichnet, dass** die Funktionsschicht (3a) an der Oberfläche hydrophobe Eigenschaften aufweist und an der Oberfläche wärmebehandelt oder chemisch behandelt ist, um die hydrophoben Eigenschaften an der Außenfläche der Funktionsschicht zu erhalten.

## Claims

1. A process for producing, applying and fixing a multilayer surface coating (2a, 3a, 4a) to at least one surface (1a) to be coated, of a host substrate (1),
**characterized in that** it consists in applying successively:
- a layer of fixing product (2), called the fixing layer (2a), directly to the or each surface (1a) to be coated of the host substrate (1) by covering the latter, the surface interaction between the latter achieving their fixing to each other,
- a layer, of functional product (3), called the functional layer (3a), directly to the fixing layer (2a) by covering the latter, the surface interaction between the latter effecting their fixing to each other and thus the fixing of the functional layer (3a) to the or each surface (1a) to be coated of the host substrate (1) by means of the fixing layer (2a), said functional product (3) being applied to the fixing layer (2a) by spraying, projecting or spreading,
wherein,
said functional product (3) being in liquid form and comprising monolayer or multilayer graphene at a concentration greater than or equal to 0.2g/L and at least one surfactant dispersed in water, in a hydroalcoholic solution or in a solvent,
said fixing product (2) being capable of being applied and fixed directly onto the or each surface (1a) to be coated, of the host substrate (1) by surface interaction between said fixing product (2) and said surface (1a) to be coated, and
said functional product (3) being capable of being applied and fixed directly to the fixing product (2) by surface interaction between said functional product (3) and said fixing product (2).

2. The process as claimed in claim 1, further comprising a drying period for the fixing layer (2a), to promote fixing of the fixing layer (2a) to the or each surface (1a) to be coated of the host substrate (1) and/or fixing of the functional layer (3a) to the fixing layer (2a), said drying period being implemented before and/or after application of the functional layer (3a).

3. The process as claimed in claim 1 or claim 2, **characterized in that** the amount of monolayer or multilayer graphene of the functional product (3) applied to the fixing layer (2a) is chosen to be less than about 10%, preferentially less than about 5%, more preferentially less than 3%, of the mass of said host substrate (1).

4. The process as claimed in any of the preceding claims, **characterized in that** it further consists, starting from a protective product (4) capable of being applied and fixed directly to the functional layer (3) by interaction between them, in applying a layer of said protective product (4), called the protective layer (4a), to the functional layer (3a) by covering the latter, preferably naturally or under the effect of a thermal action, the interaction between the latter effecting their fixing to each other.

5. The process as claimed in any one of claims 1 to 4, **characterized in that** the functional product (3) comprises monolayer or multilayer graphene at a concentration greater than or equal to 1 g/L, preferably greater than or equal to 2 g/L, and at least one surfactant.

6. The process as claimed in any one of claims 1 to 5, **characterized in that** the fixing product (2) comprises at least one of the products belonging to the following list: primers, resins, adhesive agents, composites, polymers, epoxy paints, water-based paints, oil-based paints or paints containing fillers for resisting high temperatures.

7. The process as claimed in claim 3 or as claimed in any one of claims 4 to 6, each taken in combination with claim 3, **characterized in that** the protective product 4 comprises at least one of the products belonging to the following list: primers, resins, adhesive agents, polymers, composites, superhydrophobic coatings, fireproof coatings such as polymeric primers, epoxy paints, silicon paints, water-based paints, oil-based paints, paints containing fillers for resisting high temperatures, polyurethanes, high-temperature polyimides, polyesters.

8. The process as claimed in any one of claims 1 to 7, **characterized in that** the fixing layer (2a) or the functional layer (3a) or the protective layer (4a) is applied by a means or process selected from the following list: spraying, projection, brushing, spreading, dip-coating, inkjet printing or rotogravure, screen printing, lithography or flexography.

9. The process as claimed in any one of claims 1 to 8, **characterized in that** it consists, starting from an activation system, in causing, in interaction with the monolayer or multilayer graphene, an increase in the temperature of said functional layer (3a).

10. The process as claimed in claim 9, **characterized in that** it consists in starting from the activation system comprising an electrical power supply and two electrodes (5) connected to the latter, in placing the electrodes (5) by bringing them into contact with the functional layer (3a) so as to be able to apply an electrical voltage making it possible to cause an electrical current to pass through the functional layer (3a) having the effect of causing, in interaction with the monolayer or multilayer graphene, an increase in the temperature of said functional layer (3a).

11. The process as claimed in any one of claims 1 to 10, **characterized in that** the functional layer (3a), once applied to the fixing layer (2a), is thermally or chemically treated on the surface to obtain hydrophobic properties.

12. A host substrate device obtained by the process as claimed in any one of claims 1 to 11, said host substrate device comprising a host substrate (1) having at least one surface to be coated (1a), whether treated or untreated, **characterized in that** it further comprises a multilayer surface coating (2a, 3a) produced, applied and fixed to the or each surface (1a) to be coated according to the process as claimed in any one of claims 1 to 11, said multilayer surface coating (2a, 3a) comprising a superposition of a layer of fixing product (2), called the fixing layer (2a), applied and fixed directly to the or each surface (1a) to be coated and a layer of functional product (3), called the functional layer (3a), based on monolayer or multilayer graphene, applied and fixed directly to the fixing layer (2a).

13. The host substrate device as claimed in claim 12, **characterized in that** the multilayer surface coating (2a, 3a, 4a) further comprises a layer of protective material (4), called the protective layer (4a), which is applied and fixed to the functional layer (3a) by surface interaction, covering the latter.

14. The host substrate device as claimed in claim 12 or claim 13, **characterized in that** the amount of monolayer or multilayer graphene of the functional product (3) applied to the or each surface (1a) to be coated of the host substrate (1) is less than about 10%, preferentially less than about 5%, more preferentially less than 3%, of the mass of said host substrate (1).

15. A heating element comprising a host substrate device as claimed in any one of claims 12 to 14, **characterized in that** it further comprises an activation system to cause, in interaction with the monolayer or multilayer graphene, an increase in the temperature of said functional layer (3a) and thus of the heating element.

16. The heating element as claimed in claim 15, **characterized in that** the activation system comprises two electrodes (5) connected to a power supply and **in that** said electrodes (5) are connected to the functional layer (3a) so as to be able to apply an electric voltage enabling an electric current to be generated in the functional layer (3a) having the effect of causing, in interaction with the monolayer or multilayer graphene, an increase in the temperature of said functional layer (3a) and thus of the heating element.

17. An anticorrosion element comprising a host substrate device as claimed in any one of claims 12 to 14, **characterized in that** the functional product (3) is made from monolayer or multilayer graphene, naturally exhibiting anticorrosion properties, the surface (1a) to be coated of the host substrate (1) then being at least partly metallic.

18. A hydrophobic element comprising a host substrate device as claimed
in any one of claims 12 to 17, **characterized in that** the functional layer (3a) has hydrophobic properties on the surface and is heat-treated or chemically treated on the surface to obtain said hydrophobic properties on the outer surface of said functional layer.
